# EUROPEAN PATENT SPECIFICATION

(11) **EP 3 867 616 B1**
(45) Date of publication and mention of the grant of the patent: **06.12.2023**
(21) Application number: 19804843.1
(22) Date of filing: 18.10.2019
(51) Int. Cl.: G01L 5/28

(54) **METHOD FOR TESTING THE BRAKING CAPACITY TO VEHICLE AND SYSTEM THEREOF**
SYSTEM UND METHODE ZUM TESTEN VON FAHRZEUGBREMSEN
SYSTÈME ET MÉTHODE D'ESSAI DE FREINS D'UN VÉHICULE

(30) Priority: 19.10.2018 IT 201800009639
(43) Date of publication of application: 25.08.2021
(73) Proprietor: PIAGGIO & C. S.p.A., 56025 Pontedera (Pisa) (IT)
(72) Inventor: CONTROZZI, Marco, 56125 Pisa (IT); LUPI, Alessandro, 56025 Pontedera (PI) (IT); BARTOLI, Domenico, 56025 Pontedera (PI) (IT); GHIONZOLI, Alessio, 56021 Cascina (PI) (IT); DARIO, Paolo, 56042 Crespina Lorenzana (PI) (IT); BACCHERETI, Michele, 56017 S. Giuliano Terme (PI) (IT); MONTAGNANI, Federico, 56017 San Giuliano Terme (PI) (IT); CECCHINI, Torquato, 55100 Lucca (IT); ROGGI, Massimo, 58045 Civitello Paganico (GR) (IT); MINUTILLO, Marco, 56031 Bientina (PI) (IT)
(74) Representative: ABM Agenzia Brevetti & Marchi
(86) International application number: PCT/IB2019/058907
(87) International publication number: WO 2020/079661

(56) References cited:
- DE-A1- 3 303 588
- FR-A1- 2 791 432
- FR-A1- 2 842 302
- JP-A- H04 204 348
- US-A1- 2018 174 381

## Description

### Field of the invention

The present invention relates to the field of production and testing of vehicles.

In particular, the invention relates to a method and a working area for checking the braking capacity of motorcycles.

### Description of the prior art

As well known, the testing of the motorcycle braking system requires the repeated actuation of the brake lever while driving on a motorized roller table. A control interface informs the user about the level and duration of the traction to be exercised on the brake lever and the braking data are recorded by the roller of the motorized bench.

In particular, the operator positions the vehicle on the bench, positions itself on it and manually operates the braking system levers following the test protocol. The operator follows visual instructions from a video terminal that indicate the magnitude and duration of the force to be transferred to the braking system levers that define the braking cycles to be performed and other useful instructions to proceed with the test.

The system of sensors present on the roller bench is suitable for measuring the interaction forces between the wheel of the vehicle and the roller of the test bench, to check whether or not a predefined threshold value is exceeded. Furthermore, the operator is required to provide subjective information on the quality of the braking, in particular information on the response of the lever interacting with the bench by means of a push-button panel.

However, this manual operation has several disadvantages, both in terms of safety and accuracy of the test.

First of all, the fact that the vehicle is locked manually, by the weight of the operator, affects the accuracy and repeatability of the test, since the portion of the wheels in contact with the rotating rollers and the weight exerted on them can vary depending on how the operator positions the motor vehicle in the test area.

Furthermore, when the wheels are turned, the rotation speed can destabilize the vehicle if it is not positioned correctly. An eventual carelessness of the operator can therefore lead to accidents of various types, with possible damages both on the vehicle and on the operator himself.

An additional risk factor for the health of operators is given by the repeated manual operation of the brake lever, which can lead the operator to develop disabling syndromes.

DE202006011246 describes a dynamometer with rollers for checking the braking capacity of vehicles. The bench comprises at least one roller, adapted to drive a tire, and at least one force sensor suitable for measuring the braking force exerted by the tire on the roller. In particular, the rollers are able to lock the vehicle preventing it from moving longitudinally from its test position.

However, the system described in DE202006011246 is able to work with stable vehicles in its position, such as a car. In fact, the rollers provided in DE202006011246 do not allow to compensate for a rolling moment which is instead present in the event that the brake test must be performed on a twowheel or 3-wheel inclinable vehicle. These vehicles, in fact, cannot be put on the stand during the test, and must be kept in their position by alternative means.

JPH04204348 discloses a device for inspecting the antilock brake system of a motorcycle. The device comprises an inspection unit having a circuit for sending rotation control signals to a drive motor according to signals from switches SW1 and SW2 and for judging whether or not the brake force is normal by receiving brake force signals from a brake force meter. The device also comprises clamping devices for clamping the wheels of the motorcycle in order to maintain the motorcycle in stabilized upright attitude during the inspection. However, such system doesn't allow an automatic positioning and engagement of the brake actuation device.

US2018174381 describes a roll and brake test system and a method of controlling the same. FR2791432 relates to a method for controlling an anti-blocking function (ABR) for the wheels of a motor vehicle fitted with an ABR unit.

### Summary of the invention

It is therefore a feature of the present invention to provide a method for checking the braking capacity of a vehicle that allows to have high precision and repeatability.

It is also a feature of the present invention to provide such a method that does not produce risk factors for the operators involved.

These and other objects are achieved by a method for checking the braking capacity of a vehicle according to claims 1 to 8.

In particular, the vehicle is a vehicle with 2 wheels or with 3 tilting wheels.

According to another aspect of the invention, a working area is claimed for carrying out this method.

### Brief description of the drawings

Further characteristic and/or advantages of the present invention are brighter with the following description of an exemplary embodiment thereof, exemplifying but not limitative, with reference to the attached drawings in which:
- Fig. 1 shows a working area used for checking the braking capacity of a vehicle, in which a first exemplary embodiment of the lock means according to the present invention is present;
- Fig. 2 diagrammatically shows the essential steps of the method for checking the braking capacity of a vehicle, according to the present invention;
- Fig. 3 shows implementation variant of the method of Fig. 2, wherein are present steps carried out by automatic handling and manipulating devices;
- Fig. 4A shows a possible path of the laser sensor of the localization device for determining the direction of the knob;
- Fig. 4B shows the graphic relating to one of the passages made by the laser sensor above the knob.

### Description of a preferred exemplary embodiment

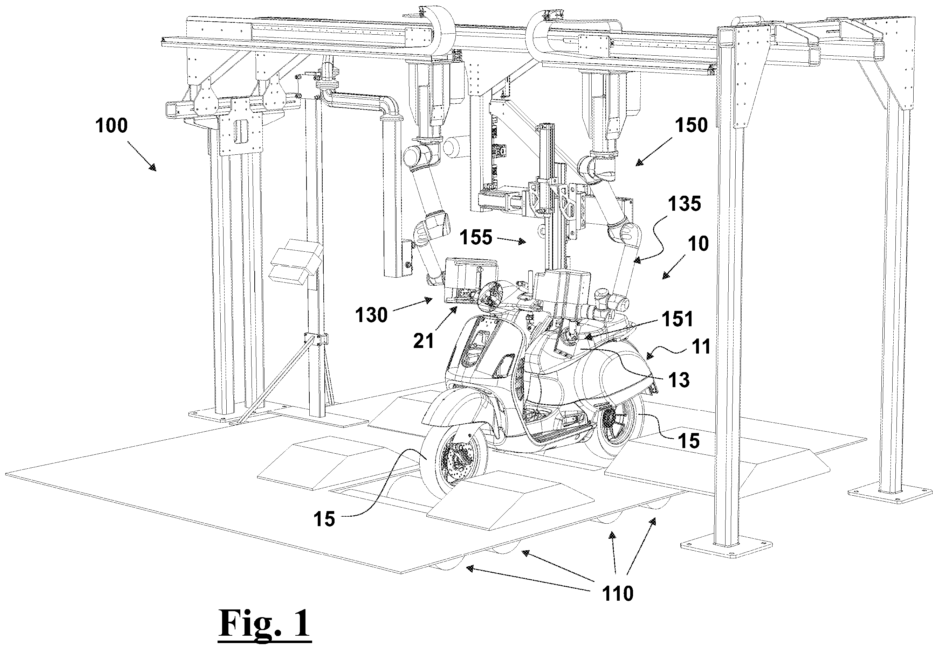

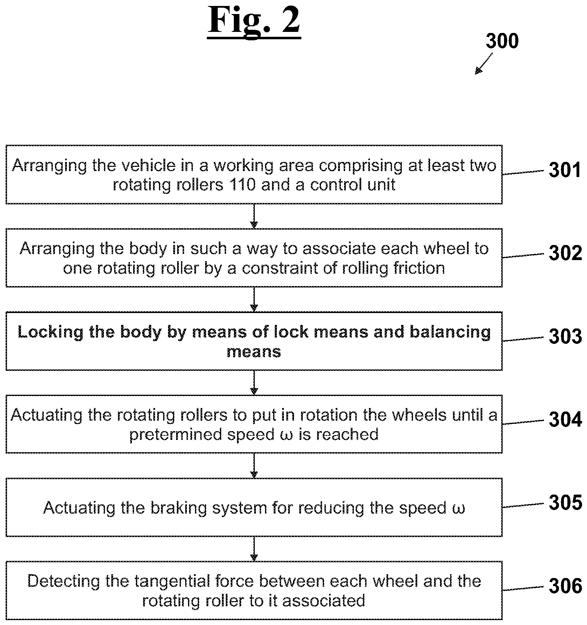

With reference to Figs. 1 and 2, the present invention claims a working area 100 and a method for checking the braking capacity of a vehicle 10, in particular a motorcycle.

Furthermore, the present invention claims a kit for changing a traditional working area in order to carry out this method.

In particular, the motorcycle 10 comprises a body 11, two wheels 15 and a braking system which can be operated by a brake lever 21 located on the handlebar 12.

The method comprises a first step of arranging the vehicle 10 in a working area 100 wherein at least two rotating rollers 110 and a control unit are provided [301].

Then, the body is located in a predetermined position, in such a way that the wheels 15 of the motorcycle are in contact with the rotation of rollers 110 and are constrained to them by rolling friction [302].

There is therefore a step of actuating the rotating rollers 110 to put in rotation the wheels until a predetermined speed ***ω*** is reached [304].

Once the desired speed ***ω*** has been reached, the braking system is operated for reducing the speed ***ω*** [305] and the tangential force between each wheel 15 and the respective rotating roller 110 is detected [306], in order to subsequently carry out the analysis on the status of the braking system.

According to the present invention, before the step of actuating the rotating rollers 110, the motorcycle 10 is arranged in the working area 100 and blocked by lock means. In particular, a balancing system 150 is present, comprising a fastening device 151, which keeps the body 11 in the above described predetermined position, i.e. with the wheels 15 in contact with the rollers 110, also in case of unexpected external forces applied to the motorcycle 10 [303]. Furthermore, second moving means 155 is provided arranged to actuate the fastening device 151.

In particular, the balancing system 150 allows to compensate for any roll and yaw imbalances of the vehicle 10, detectable by means of sensors integrated in the fastening device 151 in contact with the saddle 13, and to compensate for the height variations that the saddle 13 makes following the vertical displacements of the plates at the rollers 110 of the working area 100, which enable or prevent contact between the wheel and the rollers. Such balancing system 150 is therefore essential for using the method with a vehicle having 2 wheels or having 3 tilting wheels.

This step represents a first new feature of the present invention, since in prior art the blocking of the motorcycle is made by the operator himself, manually, without any locking system that constraints the wheels in contact with the rollers and that keeps balanced the motorcycle during the checking of the braking capacity.

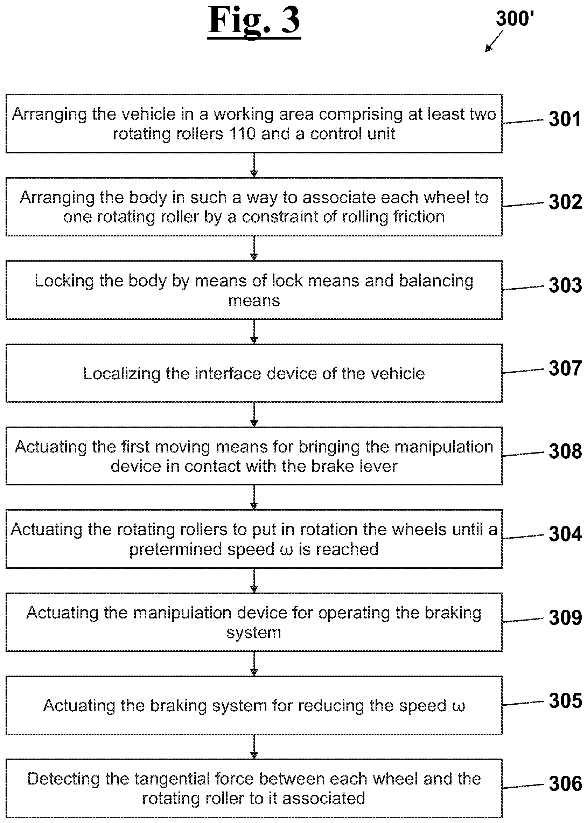

With reference even at Fig. 3, in implementation variant of the method there are also provided some additional steps performed by a robotic system to operate the braking system.

In particular, in the flow-sheet 300' an additional step is provided of localizing the interface device of the motorcycle, and, in particular the knob 22 [307].

Such step is made by a first moving means 135, in particular a robotic arm, arranged to actuate a manipulation device 130, comprising a gripper 131.

In particular, the manipulation device 130 comprises a laser sensor configured to detect the position, the orientation and the lateral end of the knob 22, and therefore indirectly of the brake lever 21.

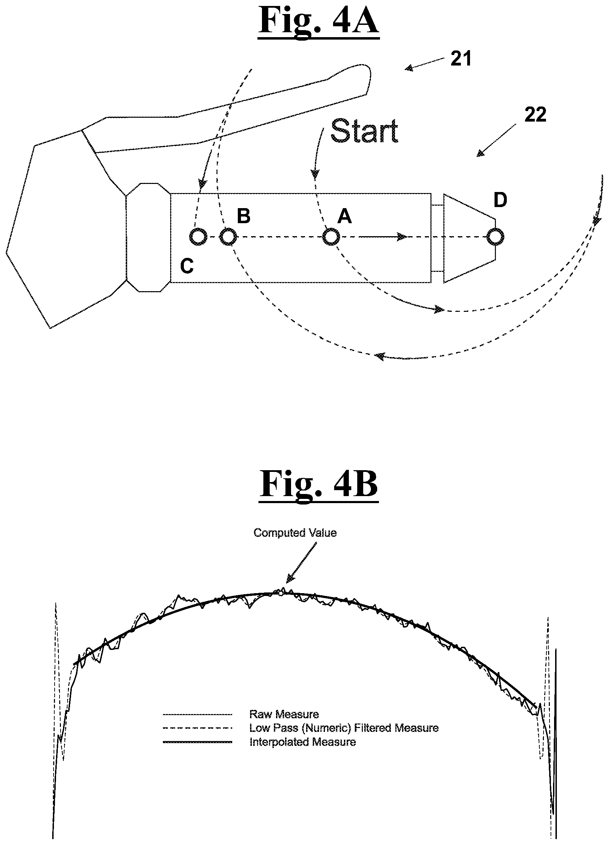

In Fig. 4A is shown a possible path of the laser sensor of the localizing device for determining the direction of the knob 22.

In particular, the laser sensor carries out circumferential arcs of different radii, identifying, in each passage, the maximum proximity of the knob 22 and thus defining the points A, B and C. Consequently it is defined the point D, corresponding to the end of the knob 22, where the manipulation device 130 is then inserted;

Fig. 4B shows the graphic relating to one of the passages made by the laser sensor above the knob. The top of the curve corresponds to one of the points A, B and C identified.

Subsequently, the control unit operates the actuation of the first moving means 135 for bringing the manipulation device 130 in contact with the brake lever 21 [308].

In particular, the manipulation device 130 also comprises a gripper 131 arranged to pull the brake lever 21 for operating the braking system [309].

The force applied to the brake lever 21 and the displacement of the lever itself can also be measured by sensors placed in the manipulation device 130, so as to be able to send this information to the control unit and check the correct operation of the hydraulic system.

For example, the sensor configured to measure the force applied to the brake lever 21 can comprise a load cell based on strain gauges located on the gripper 131. Alternatively, it can be a resistive sensor.

To measure the displacement of the lever 21, for example, an optical encoder or potentiometers can be used.

Notwithstanding in Fig. 1 a working area 100 specifically made by operating said method is shown, the present invention also provides a kit for modifying a traditional work area.

Such modification kit comprises the balancing system 150, the manipulation device 130 and the control unit arranged to control the balancing system 150, the handling device 130 and the rotating rollers 110 in a coordinated manner.

## Claims

1. A method for checking the braking capacity of a vehicle (10), said vehicle (10) comprising:
- a body (11);
- at least one wheel (15);
- a braking system arranged to reduce the speed of said or each wheel (15), said braking system comprising an interface device arranged to operate said braking system;
said method comprising the steps of:
- arranging said vehicle (10) in a working area (100) comprising at least one rotating roller (110) and a control unit;
- arranging said body (11) in a predetermined position and associating said or each wheel (15) to at least one rotating roller (110) by a constraint of rolling friction;
- actuating said or each rotating roller (110) to put in rotation at least one wheel (15) to it associated until a predetermined speed *ω* is reached;
- actuating said braking system, by said interface device (20), for reducing said predetermined speed ***ω*** of said or each wheel (15) put in rotation;
- detecting the tangential force between said or each wheel (15) and at least one rotating roller (110) to it associated;
wherein, downstream of said step of actuating said or each rotating roller (110), a step is provided of locking said vehicle (10) in such a way that said body (11) is maintained substantially in said predetermined position also in case of forces applied to said body (11), said step of locking carried out by means of lock means,
wherein said lock means comprises a balancing system (150) arranged to provide said step of locking said vehicle (10), said balancing system (150) arranged to compensate for any roll and/or yaw unbalances of said vehicle (10),
said method **characterized in that** said working area (100) comprises a manipulation device (130) arranged in contact with said interface device in order to carry out said step of actuating said braking system,
**and in that** said working area (100) comprises a localization system (140) and they are also provided the steps of:
- localizing a position of said interface device with respect to a reference system ***S*** by said localization system (140);
- sending said position of said interface device to said control unit.

2. The method for checking the braking capacity of a vehicle (10), according to claim 1, wherein said working area (100) also comprises at least one sensor (120) for carrying out said step of detecting the tangential force and for sending the measured values to a control unit.

3. The method for checking the braking capacity of a vehicle (10), according to claim 1, wherein said working area (100) comprises first moving means (135) arranged to actuate said manipulation device (130) and where they are also provided the steps of:
- actuating, by said control unit, said first moving means (135) for bringing said manipulation device (130) in contact with said interface device (20);
- actuating, by said control unit, said manipulation device (130) to carry out said step of actuating said braking system.

4. The method for checking the braking capacity of a vehicle (10), according to claim 3, wherein said vehicle (10) comprises a handlebar (12) and wherein said interface device comprises a brake lever (21) arranged on said handlebar (12), said manipulation device (130) comprising at least one first gripper (131) arranged to rotate said brake lever (21) to provide said step actuating said braking system.

5. The method for checking the braking capacity of a vehicle (10), according to claim 4, wherein said manipulation device (130) comprises a laser sensor and wherein said step of localizing a position of said interface device comprises a step of detecting an orientation of said handlebar (12) with respect to said reference system ***S*** by said laser sensor.

6. The method for checking the braking capacity of a vehicle (10), according to claim 4, wherein said manipulation device (130) comprises at least one second gripper (132) arranged to provide a fastening of said manipulation device (130) to said interface device (20).

7. The method for checking the braking capacity of a vehicle (10), according to claim 1, wherein said balancing system (150) comprises a fastening device (151), arranged in contact with said body (11) at a predetermined portion (11'), and second moving means (155) arranged to actuate said fastening device (151).

8. The method for checking the braking capacity of a vehicle (10), according to claims 3 and 7, wherein they are also provided the steps of:
- localizing a position of said predetermined portion (11') with respect to a reference system ***S*** by said localization system (140);
- sending said position of said predetermined portion (11') to said control unit;
- actuating, by said control unit, said second moving means (155) for bringing said fastening device (151) in contact with said predetermined portion (11').

9. A working area (100) for checking the braking capacity of a vehicle (10), said vehicle (10) comprising:
- a body (11);
- at least one wheel (15);
- a braking system arranged to reduce the speed of said or each wheel (15), said braking system comprising an interface device arranged to operate said braking system;
said working area (100) comprising:
- at least one rotating roller (110) configured in such a way that, when said vehicle (10) is arranged in a predetermined position in said working area (100), said or each wheel (15) is associated with at least one rotating roller (110) by a constraint of rolling friction;
- a sensor (120) configured to measure a tangential force between said or each wheel (15) and at least one rotating roller (110) to it associated;
- a balancing system (150) arranged to block said vehicle (10) in said predetermined position;
- a manipulation device (130) having first moving means (135), arranged in contact with said interface device for operating said braking system;
- a control unit arranged to coordinate said balancing system (150), said manipulation device (130), and said rotating roller (110);
said working area (100) **characterized in that** it further comprises a localization system (140) arranged to locate a position of said interface device with respect to a reference system ***S***.

## Patentansprüche

1. Verfahren zum Überprüfen der Bremsleistung eines Fahrzeugs (10), wobei das Fahrzeug (10) umfasst:
- einen Aufbau (11);
- mindestens ein Rad (15);
- ein Bremssystem, das dazu angeordnet ist, die Geschwindigkeit des oder jedes Rads (15) zu reduzieren, wobei das Bremssystem eine Schnittstellenvorrichtung umfasst, die dazu angeordnet ist, das Bremssystem zu betreiben;
wobei das Verfahren die Schritte umfasst:
- Anordnen des Fahrzeugs (10) in einem Arbeitsbereich (100), der mindestens eine rotierende Walze (110) und eine Steuereinheit umfasst;
- Anordnen des Aufbaus (11) in einer vorbestimmten Position und Zuordnen des oder jedes Rads (15) zu mindestens einer rotierenden Walze (110) durch eine Beschränkung der Rollreibung;
- Betätigen der oder jeder rotierenden Walze (110), um mindestens ein ihr zugeordnetes Rad (15) in Drehung zu versetzen, bis eine vorbestimmte Geschwindigkeit ***ω*** erreicht ist;
- Betätigen des Bremssystems durch die Schnittstellenvorrichtung (20), um die vorbestimmte Geschwindigkeit ***ω*** des oder jedes in Rotation versetzten Rads (15) zu reduzieren;
- Erfassen der Tangentialkraft zwischen dem oder jedem Rad (15) und mindestens einer diesem zugeordneten rotierenden Walze (110);
wobei nach dem Schritt des Betätigens der oder jeder rotierenden Walze (110) ein Schritt zum Festsetzen des Fahrzeugs (10) in einer solchen Weise vorgesehen ist, dass der Aufbau (11) im Wesentlichen in der vorbestimmten Position auch im Falle von Kräften gehalten wird, die auf den Aufbau (11) aufgebracht werden, wobei der Schritt des Festsetzens mittels einer Festsetzeinrichtung durchgeführt wird,
wobei die Festsetzeinrichtung ein Ausgleichssystem (150) umfasst, das dazu angeordnet ist, den Schritt des Festsetzens des Fahrzeugs (10) vorzusehen, wobei das Ausgleichssystem (150) dazu angeordnet ist, jegliche Roll- und/oder Gierunwucht des Fahrzeugs (10) zu kompensieren,
wobei das Verfahren **dadurch gekennzeichnet ist, dass** der Arbeitsbereich (100) eine Manipulationsvorrichtung (130) umfasst, die in Kontakt mit der Schnittstellenvorrichtung angeordnet ist, um den Schritt des Betätigens des Bremssystems durchzuführen, **und dass** der Arbeitsbereich (100) ein Lokalisierungssystem (140) umfasst und außerdem die folgenden Schritte vorgesehen sind:
- Lokalisieren einer Position des Schnittstellenvorrichtung in Bezug auf ein Referenzsystem ***S*** durch das Lokalisierungssystem (140);
- Senden der Position der Schnittstellenvorrichtung an die Steuereinheit.

2. Verfahren zum Überprüfen der Bremsleistung eines Fahrzeugs (10) nach Anspruch 1, wobei der Arbeitsbereich (100) außerdem mindestens einen Sensor (120) zum Durchführen des Schritts des Erfassens der Tangentialkraft und zum Senden der gemessenen Werte an eine Steuereinheit umfasst.

3. Verfahren zum Überprüfen der Bremsleistung eines Fahrzeugs (10) nach Anspruch 1, wobei der Arbeitsbereich (100) eine erste Bewegungseinrichtung (135) umfasst, die dazu angeordnet ist, die Manipulationsvorrichtung (130) zu betätigen, und wobei außerdem die folgenden Schritte vorgesehen sind:
- Betätigen der ersten Bewegungseinrichtung (135) durch die Steuereinheit, um die Manipulationsvorrichtung (130) in Kontakt mit der Schnittstellenvorrichtung (20) zu bringen;
- Betätigen der Manipulationsvorrichtung (130) durch die Steuereinheit, um den Schritt des Betätigens des Bremssystems durchzuführen.

4. Verfahren zum Überprüfen der Bremsleistung eines Fahrzeugs (10) nach Anspruch 3, wobei das Fahrzeug (10) einen Lenker (12) umfasst und wobei die Schnittstellenvorrichtung einen am Lenker (12) angeordneten Bremshebel (21) umfasst, wobei die Manipulationsvorrichtung (130) mindestens einen ersten Greifer (131) umfasst, der dazu angeordnet ist, den Bremshebel (21) zu rotieren, um den Schritt des Betätigens des Bremssystems vorzusehen.

5. Verfahren zum Überprüfen der Bremsleistung eines Fahrzeugs (10) nach Anspruch 4, wobei die Manipulationsvorrichtung (130) einen Lasersensor umfasst und wobei der Schritt des Lokalisierens einer Position der Schnittstellenvorrichtung einen Schritt des Erfassens einer Ausrichtung des Lenkers (12) in Bezug auf das Referenzsystem ***S*** durch den Lasersensor umfasst.

6. Verfahren zum Überprüfen der Bremsleistung eines Fahrzeugs (10) nach Anspruch 4, wobei die Manipulationsvorrichtung (130) mindestens einen zweiten Greifer (132) umfasst, der dazu angeordnet ist, eine Befestigung der Manipulationsvorrichtung (130) an der Schnittstellenvorrichtung (20) vorzusehen.

7. Verfahren zum Überprüfen der Bremsleistung eines Fahrzeugs (10) nach Anspruch 1, wobei das Ausgleichssystem (150) eine Befestigungsvorrichtung (151), die in Kontakt mit dem Aufbau (11) an einem vorbestimmten Abschnitt (11') angeordnet ist, und eine zweite Bewegungseinrichtung (155) umfasst, die dazu angeordnet sind, die Befestigungsvorrichtung (151) zu betätigen.

8. Verfahren zum Überprüfen der Bremsleistung eines Fahrzeugs (10) nach den Anspruch 3 und 7, wobei außerdem die folgenden Schritte vorgesehen sind:
- Lokalisieren einer Position des vorbestimmten Abschnitts (11') in Bezug auf ein Referenzsystem ***S*** durch das Lokalisierungssystem (140);
- Senden der Position des vorbestimmten Abschnitts (11') an die Steuereinheit;
- Betätigen der zweiten Bewegungseinrichtung (155) durch die Steuereinheit, um die Befestigungsvorrichtung (151) in Kontakt mit dem vorbestimmten Abschnitt (11') zu bringen.

9. Arbeitsbereich (100) zum Überprüfen der Bremsleistung eines Fahrzeugs (10), wobei das Fahrzeug (10) umfasst:
- einen Aufbau (11);
- mindestens ein Rad (15);
- ein Bremssystem, das dazu angeordnet ist, die Geschwindigkeit des oder jedes Rads (15) zu reduzieren, wobei das Bremssystem eine Schnittstellenvorrichtung umfasst, die dazu angeordnet ist, das Bremssystem zu betreiben;
wobei der Arbeitsbereich (100) umfasst:
- mindestens eine rotierende Walze (110), die so konfiguriert ist, dass, wenn das Fahrzeug (10) in einer vorbestimmten Position im Arbeitsbereich (100) angeordnet ist, das oder jedes Rad (15) mindestens einer rotierenden Walze (110) durch eine Einschränkung der Rollreibung zugeordnet ist;
- einen Sensor (120), der dazu konfiguriert ist, eine Tangentialkraft zwischen dem oder jedem Rad (15) und mindestens einer diesem zugeordneten rotierenden Walze (110) zu messen;
- ein Ausgleichssystem (150), das dazu angeordnet ist, das Fahrzeug (10) in der vorbestimmten Position zu blockieren;
- eine Manipulationsvorrichtung (130) mit einer ersten Bewegungseinrichtung (135), die in Kontakt mit der Schnittstellenvorrichtung angeordnet sind, um das Bremssystem zu betätigen;
- eine Steuereinheit, die dazu angeordnet ist, das Ausgleichssystem (150), die Manipulationsvorrichtung (130) und die rotierende Walze (110) zu koordinieren;
wobei der Arbeitsbereich (100) **dadurch gekennzeichnet ist, dass** er ferner ein Lokalisierungssystem (140) umfasst, das dazu angeordnet ist, eine Position der Schnittstellenvorrichtung in Bezug auf ein Referenzsystem ***S*** zu orten.

## Revendications

1. Procédé permettant la vérification de la capacité de freinage d'un véhicule (10), ledit véhicule (10) comprenant :
- un corps (11) ;
- au moins une roue (15) ;
- un système de freinage agencé pour réduire la vitesse de ladite ou de chaque roue (15), ledit système de freinage comprenant un dispositif d'interface agencé pour faire fonctionner ledit système de freinage ;
ledit procédé comprenant les étapes de :
- agencement dudit véhicule (10) dans une zone de travail (100) comprenant au moins un rouleau rotatif (110) et une unité de commande ;
- agencement dudit corps (11) dans une position prédéfinie et l'association de ladite ou de chaque roue (15) à au moins un rouleau rotatif (110) par une contrainte de frottement de roulement ;
- actionnement dudit ou de chaque rouleau rotatif (110) pour mettre en rotation au moins une roue (15) qui lui est associée jusqu'à ce qu'une vitesse prédéfinie *ω* soit atteinte ;
- actionnement dudit système de freinage, par ledit dispositif d'interface (20), pour réduire ladite vitesse prédéfinie *ω* de ladite ou de chaque roue (15) mise en rotation ;
- détection de la force tangentielle entre ladite ou chaque roue (15) et au moins un rouleau rotatif (110) qui lui est associé ;
en aval de ladite étape d'actionnement dudit ou de chaque rouleau rotatif (110), une étape étant prévue de verrouillage dudit véhicule (10) d'une façon telle que ledit corps (11) soit maintenu sensiblement dans ladite position prédéfinie également en cas de forces appliquées audit corps (11), ladite étape de verrouillage étant effectuée au moyen d'un moyen de verrouillage,
ledit moyen de verrouillage comprenant un système d'équilibrage (150) agencé pour assurer ladite étape de verrouillage dudit véhicule (10), ledit système d'équilibrage (150) étant agencé pour compenser tout déséquilibre de roulis et/ou de lacet dudit véhicule (10),
ledit procédé étant **caractérisé en ce que** ladite zone de travail (100) comprend un dispositif de manipulation (130) agencé au contact dudit dispositif d'interface afin d'effectuer ladite étape d'actionnement dudit système de freinage, **et en ce que** ladite zone de travail (100) comprend un système de localisation (140) et les étapes suivantes sont également prévues :
- localisation d'une position dudit dispositif d'interface par rapport à un système de référence ***S*** par ledit système de localisation (140) ;
- envoi de ladite position dudit dispositif d'interface à ladite unité de commande.

2. Procédé permettant la vérification de la capacité de freinage d'un véhicule (10), selon la revendication 1, ladite zone de travail (100) comprenant également au moins un capteur (120) pour effectuer ladite étape de détection de la force tangentielle et pour envoyer les valeurs mesurées à une unité de commande.

3. Procédé permettant la vérification de la capacité de freinage d'un véhicule (10), selon la revendication 1, ladite zone de travail (100) comprenant un premier moyen de déplacement (135) agencé pour actionner ledit dispositif de manipulation (130) et où les étapes suivantes sont également prévues :
- actionnement, par ladite unité de commande, dudit premier moyen de déplacement (135) pour amener ledit dispositif de manipulation (130) en contact avec ledit dispositif d'interface (20) ;
- actionnement, par ladite unité de commande, dudit dispositif de manipulation (130) pour effectuer ladite étape d'actionnement dudit système de freinage.

4. Procédé permettant la vérification de la capacité de freinage d'un véhicule (10), selon la revendication 3, ledit véhicule (10) comprenant un guidon (12) et ledit dispositif d'interface comprenant un levier de frein (21) agencé sur ledit guidon (12), ledit dispositif de manipulation (130) comprenant au moins un premier dispositif de préhension (131) agencé pour faire tourner ledit levier de frein (21) afin de fournir ladite étape d'actionnement dudit système de freinage.

5. Procédé permettant la vérification de la capacité de freinage d'un véhicule (10), selon la revendication 4, ledit dispositif de manipulation (130) comprenant un capteur laser et ladite étape de localisation d'une position dudit dispositif d'interface comprenant une étape de détection d'une orientation dudit guidon (12) par rapport audit système de référence ***S*** par ledit capteur laser.

6. Procédé permettant la vérification de la capacité de freinage d'un véhicule (10), selon la revendication 4, ledit dispositif de manipulation (130) comprenant au moins un second dispositif de préhension (132) agencé pour assurer une fixation dudit dispositif de manipulation (130) audit dispositif d'interface (20).

7. Procédé permettant la vérification de la capacité de freinage d'un véhicule (10), selon la revendication 1, ledit système d'équilibrage (150) comprenant un dispositif de fixation (151), agencé en contact avec ledit corps (11) au niveau d'une partie prédéfinie (1 1'), et un second moyen de déplacement (155) agencé pour actionner ledit dispositif de fixation (151).

8. Procédé permettant la vérification de la capacité de freinage d'un véhicule (10), selon les revendications 3 et 7, les étapes suivantes sont également prévues :
- la localisation d'une position de ladite partie prédéfinie (11') par rapport à un système de référence ***S*** par ledit système de localisation (140) ;
- l'envoi de ladite position de ladite partie prédéfinie (11') à ladite unité de commande ;
- l'actionnement, par ladite unité de commande, dudit second moyen de déplacement (155) pour amener ledit dispositif de fixation (151) en contact avec ladite partie prédéfinie (11').

9. Zone de travail (100) destinée à la vérification de la capacité de freinage d'un véhicule (10), ledit véhicule (10) comprenant :
- un corps (11) ;
- au moins une roue (15) ;
- un système de freinage agencé pour réduire la vitesse de ladite ou de chaque roue (15), ledit système de freinage comprenant un dispositif d'interface agencé pour faire fonctionner ledit système de freinage ;
ladite zone de travail (100) comprenant :
- au moins un rouleau rotatif (110) conçu d'une façon telle que, lorsque ledit véhicule (10) est agencé dans une position prédéfinie dans ladite zone de travail (100), ladite ou chaque roue (15) est associée à au moins un rouleau rotatif (110) par une contrainte de frottement de roulement ;
- un capteur (120) conçu pour mesurer une force tangentielle entre ladite ou chaque roue (15) et au moins un rouleau rotatif (110) qui lui est associé ;
- un système d'équilibrage (150) agencé pour bloquer ledit véhicule (10) dans ladite position prédéfinie ;
- un dispositif de manipulation (130) comportant un premier moyen de déplacement (135), agencé en contact avec ledit dispositif d'interface pour faire fonctionner ledit système de freinage ;
- une unité de commande agencée pour coordonner ledit système d'équilibrage (150), ledit dispositif de manipulation (130) et ledit rouleau rotatif (110) ;
ladite zone de travail (100) étant **caractérisée en ce qu'**elle comprend en outre un système de localisation (140) agencé pour localiser une position dudit dispositif d'interface par rapport à un système de référence ***S***.
